# EUROPEAN PATENT APPLICATION

(11) **EP 4 261 566 A1**
(43) Date of publication of application: **18.10.2023**
(21) Application number: 23162595.5
(22) Date of filing: 17.03.2023
(51) Int. Cl.: G01S 7/48, G01S 17/08, G01S 17/89, G01S 17/931, G06V 20/58, G01S 17/66

(54) **LIDAR-BASED PRIOR MAP FOR ESTIMATING STATIC OBJECTS VIA DEEP-LEARNING ALGORITHM**

(30) Priority: 11.04.2022 US 202263362815 P
(71) Applicant: Tusimple, Inc., San Diego, CA 92122 (US)
(72) Inventor: Yu, Nan, San Diego (US); Rossi Jr, Robert August, San Diego (US); Lai, Jiaming, San Diego (US); Zhang, Bolun, San Diego (US)
(74) Representative: Black, Diego

(57) **Abstract**

A lidar-based prior map for estimating static objects via deep-learning algorithm is disclosed. In one aspect, a server includes a network communication device configured to communicate with a plurality of autonomous vehicles over a network, a memory, and a processor. The processor is configured to receive LiDAR data from the autonomous vehicles, generate a LiDAR prior map comprising raw data based on the LiDAR data received from each of the autonomous vehicles, merge the raw data into a prior map, the prior map comprising an occupancy grid indicative of locations of static objects within an environment of the autonomous vehicles, and provide the prior map to the autonomous vehicles.

## Description

### BACKGROUND

### Field

The present disclosure relates generally to autonomous vehicles. More particularly, the present disclosure is related to systems and methods for generating a LiDAR-based prior map used for estimating static objects via a deep-learning algorithm.

### Description of the Related Art

One aim of autonomous vehicle technologies is to provide vehicles that can safely navigate towards a destination with limited or no driver assistance. The safe navigation of an autonomous vehicle (AV) from one point to another may include the ability to signal other vehicles, navigating around other vehicles in shoulders or emergency lanes, changing lanes, biasing appropriately in a lane, and navigating all portions or types of highway lanes. Maps that identify the locations of objects can be useful during autonomous navigation, in particular, and can be used as an additional source of data during navigation.

### SUMMARY OF CERTAIN INVENTIVE ASPECTS

In one aspect, there is provided a server comprising: a network communication device configured to communicate with a plurality of autonomous vehicles over a network; a memory; and a processor configured to: receive LiDAR data from the plurality of autonomous vehicles, generate a LiDAR prior map comprising raw data based on the LiDAR data received from each of the plurality of autonomous vehicles, merge the raw data into a prior map, the prior map comprising an occupancy grid indicative of locations of static objects within an environment of the plurality of autonomous vehicles, and provide the prior map to the plurality of autonomous vehicles.

In some embodiments, the occupancy grid of the prior map comprises a voxel, each of the voxels including a feature vector indicating whether the voxel is occupied by a static object.

In some embodiments, each of the feature vectors comprises a semantic label indicative of a type of a corresponding one of the static objects occupying the occupancy grid corresponding to the feature vector.

In some embodiments, each of the feature vectors comprises: a semantic label indicative of a type of a corresponding one of the static objects, a probability that the semantic label is accurate, and a probability that the occupancy of the static object is accurate.

In some embodiments, the processor is further configured to: generate the raw data without including any of the static objects having a height of less than 40 cm above a surface of a road.

In some embodiments, the processor is further configured to: post-process the merged raw data prior to generating the prior map.

In some embodiments, the memory is configured to store a configuration file, and the post-processing is performed based on the configuration file.

In some embodiments, generating the LiDAR prior map comprises applying deep-learning to the LiDAR data.

In some embodiments, the processor is further configured to receive the LiDAR data from one or more mapping vehicles comprising one or more LiDAR sensors configured to scan the environment for the static objects.

In some embodiments, the prior map further defines frequency-based occupancy for at least some dynamic objects.

In another aspect, there is provided a method of generating a prior map, comprising: receive LiDAR data from a plurality of autonomous vehicles; generate a LiDAR prior map comprising raw data based on the LiDAR data received from each of the plurality of autonomous vehicles; merge the raw data into a prior map, the prior map comprising an occupancy grid indicative of locations of static objects within an environment of the plurality of autonomous vehicles; and provide the prior map to the plurality of autonomous vehicles.

In some embodiments, the occupancy grid comprises a plurality of 40 cm x 40 cm x 40 cm voxels under Earth-Centered, Earth-Fixed (ECEF) coordinates.

In some embodiments, the method further comprises transforming a voxel center from the LiDAR data to the ECEF coordinates, wherein the transforming is performed without including a rotation transformation.

In some embodiments, one or more of the voxels comprises a feature vector including a first field that indicates a frequency-based occupancy for a dynamic object.

In some embodiments, the feature vector further includes a second field that indicates a frequency at which the corresponding occupancy grid is occupied by the dynamic object.

In yet another aspect, there is provided an autonomous vehicle comprising: at least one sensor configured to output sensor data; a memory; a network communications subsystem configured to receive a prior map from a prior map server, the prior map comprising an occupancy grid indicative of locations of static objects within an environment of the autonomous vehicle; and a processor configured to: receive the sensor data from the at least one sensor, and generate one or more control signals for autonomous driving of the autonomous vehicle based on the sensor data and the prior map.

In some embodiments, the processor is further configured to: filter the sensor data based on the prior map to remove static objects from the sensor data; and determine locations of dynamic objects remaining in the filtered sensor data, wherein the generating the one or more control signals is further based on the determined locations of the dynamic objects.

In some embodiments, the processor is further configured to: project three-dimensional (3D) data of the prior map onto a two-dimensional (2D) plane; and compare the projected prior map data to the sensor data, wherein the generating the one or more control signals is further based on the comparison between the projected prior map data and the sensor data.

In some embodiments, the occupancy grid includes a feature vector comprising a semantic label indicative of a type of a corresponding one of the static objects, the semantic label being configured to identify one or more of the following types of static objects: general static objects, plants and vegetation, road curbs, fences, walls, traffic poles and light poles, traffic signs, traffic cones.

In some embodiments, the at least one sensor comprises a LiDAR sensor configured to output LiDAR data, the processor is further configured to: store the LiDAR data in the memory over the course of a single run, and transmit the stored LiDAR data to the prior map server after the single run is complete.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a schematic diagram of a system including an autonomous vehicle.
FIG. 2 shows a flow diagram for operation of an autonomous vehicle (AV) safely in light of the health and surroundings of the AV.
FIG. 3 illustrates an example visualization of a prior map that can be generated in accordance with aspects of this disclosure.
FIG. 4 is a flowchart illustrating a method of generating a prior map, such as the prior map of FIG. 3, in accordance with aspect of this disclosure.
FIG. 5 is a block diagram illustrating how the prior map can be used by a planning module of an autonomous vehicle in accordance with aspects of this disclosure.

### DETAILED DESCRIPTION

Vehicles traversing highways and roadways are legally required to comply with regulations and statutes in the course of safe operation of the vehicle. For autonomous vehicles (AVs), particularly autonomous tractor trailers, the ability to recognize a malfunction in its systems and stop safely are necessary for lawful and safe operation of the vehicle. Described below in detail are systems and methods for the safe and lawful operation of an autonomous vehicle on a roadway, including the execution of maneuvers that bring the autonomous vehicle in compliance with the law while signaling surrounding vehicles of its condition.

Aspects of this disclosure relate to systems and techniques for generating prior maps using information extracted from LiDAR and deep-learning algorithms to make the best estimation of the location(s) of static objects which are relevant to autonomous navigation. A three-dimensional (3D) voxel map can be used to record detailed prior information for static objects (e.g., trees, bridges, walls, etc.) in LiDAR perception. This may be analogous to a situation in which a human driver gets used to driving on the same route and can determine any new features/static objects that have changed from previous trips on the same route, which adds better perception categories.

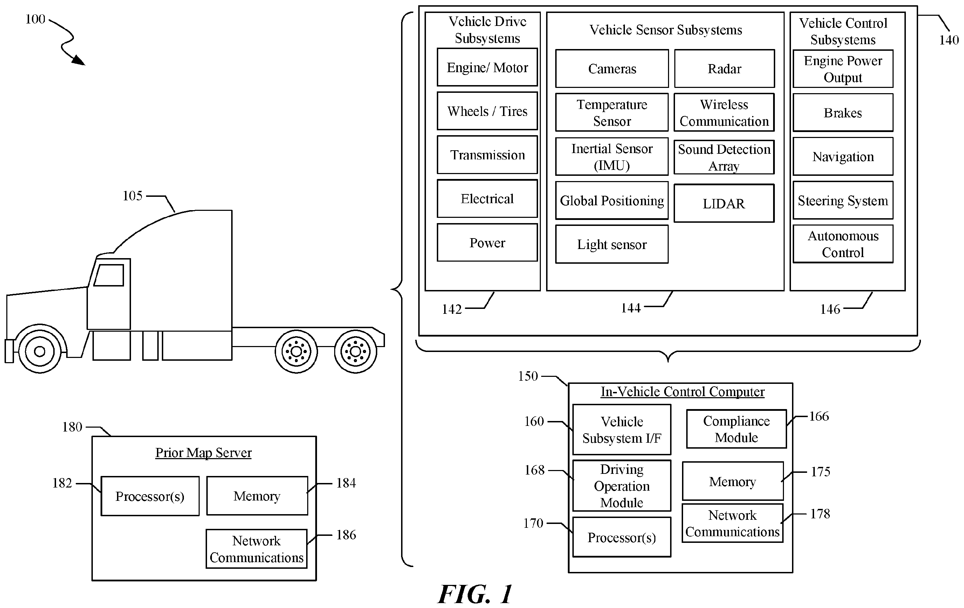

FIG. 1 shows a system 100 that includes a tractor 105 of an autonomous truck. The tractor 105 includes a plurality of vehicle subsystems 140 and an in-vehicle control computer 150. The plurality of vehicle subsystems 140 includes vehicle drive subsystems 142, vehicle sensor subsystems 144, and vehicle control subsystems. An engine or motor, wheels and tires, a transmission, an electrical subsystem, and a power subsystem may be included in the vehicle drive subsystems. The engine of the autonomous truck may be an internal combustion engine, a fuel-cell powered electric engine, a battery powered electrical engine, a hybrid engine, or any other type of engine capable of moving the wheels on which the tractor 105 moves. The tractor 105 have multiple motors or actuators to drive the wheels of the vehicle, such that the vehicle drive subsystems 142 include two or more electrically driven motors. The transmission may include a continuous variable transmission or a set number of gears that translate the power created by the engine into a force that drives the wheels of the vehicle. The vehicle drive subsystems may include an electrical system that monitors and controls the distribution of electrical current to components within the system, including pumps, fans, and actuators. The power subsystem of the vehicle drive subsystem may include components that regulate the power source of the vehicle.

Vehicle sensor subsystems 144 can include sensors for general operation of the autonomous truck 105, including those which would indicate a malfunction in the AV or another cause for an AV to perform a limited or minimal risk condition (MRC) maneuver. The sensors for general operation of the autonomous vehicle may include cameras, a temperature sensor, an inertial sensor (IMU), a global positioning system (GPS), a light sensor, a LIDAR system, a radar system, and wireless communications.

A sound detection array, such as a microphone or array of microphones, may be included in the vehicle sensor subsystem 144. The microphones of the sound detection array are configured to receive audio indications of the presence of, or instructions from, authorities, including sirens and command such as "Pull over." These microphones are mounted, or located, on the external portion of the vehicle, specifically on the outside of the tractor portion of an autonomous truck 105. Microphones used may be any suitable type, mounted such that they are effective both when the autonomous truck 105 is at rest, as well as when it is moving at normal driving speeds.

Cameras included in the vehicle sensor subsystems 144 may be rear-facing so that flashing lights from emergency vehicles may be observed from all around the autonomous truck 105. These cameras may include video cameras, cameras with filters for specific wavelengths, as well as any other cameras suitable to detect emergency vehicle lights based on color, flashing, of both color and flashing.

The vehicle control subsystem 146 may be configured to control operation of the autonomous vehicle, or truck, 105 and its components. Accordingly, the vehicle control subsystem 146 may include various elements such as an engine power output subsystem, a brake unit, a navigation unit, a steering system, and an autonomous control unit. The engine power output may control the operation of the engine, including the torque produced or horsepower provided, as well as provide control the gear selection of the transmission. The brake unit can include any combination of mechanisms configured to decelerate the autonomous vehicle 105. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the GPS device and one or more predetermined maps so as to determine the driving path for the autonomous vehicle 105. The steering system may represent any combination of mechanisms that may be operable to adjust the heading of autonomous vehicle 105 in an autonomous mode or in a driver-controlled mode.

The autonomous control unit may represent a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the GPS device, the RADAR, the LiDAR (i.e., LIDAR), the cameras, and/or other vehicle subsystems to determine the driving path or trajectory for the autonomous vehicle 105. The autonomous control that may activate systems that the autonomous vehicle 105 has which are not present in a conventional vehicle, including those systems which can allow the autonomous vehicle 105 to communicate with surrounding drivers or signal surrounding vehicles or drivers for safe operation of the autonomous vehicle 105.

An in-vehicle control computer 150, which may be referred to as a VCU, includes a vehicle subsystem interface 160, a driving operation module 168, one or more processors 170, a compliance module 166, a memory 175, and a network communications subsystem 178. This in-vehicle control computer 150 controls many, if not all, of the operations of the autonomous truck 105 in response to information from the various vehicle subsystems 140. The one or more processors 170 execute the operations that allow the system to determine the health of the autonomous vehicle 105, such as whether the autonomous vehicle 105 has a malfunction or has encountered a situation requiring service or a deviation from normal operation and giving instructions. Data from the vehicle sensor subsystems 144 is provided to VCU 150 so that the determination of the status of the autonomous vehicle 105 can be made. The compliance module 166 determines what action should be taken by the autonomous truck 105 to operate according to the applicable (i.e., local) regulations. Data from other vehicle sensor subsystems 144 may be provided to the compliance module 166 so that the best course of action in light of the AV's status may be appropriately determined and performed. Alternatively, or additionally, the compliance module 166 may determine the course of action in conjunction with another operational or control module, such as the driving operation module 168.

The autonomous truck 105 may be configured to communication with a remote prior map server 180 via the network communications subsystem 178. The prior map server 180 includes one or more processor(s) 182, a memory 184, and a network communications subsystem (or network communications device) 186. The prior map server 180 may be configured to receive LiDAR data from one or more autonomous trucks 105 via the network communications device 186, generate a prior map based on the received LiDAR data, and provide the prior map to the one or more autonomous trucks 105 as is described herein. In some implementations, the prior map server 180 may receive LiDAR data from one or more mapping vehicles instead of or in addition to the LiDAR data received from the one or more autonomous trucks 105. Depending on the embodiment, the prior map server 180 can be implemented by a cloud service or may be implemented as a stand-alone server configured to communicate with the autonomous vehicle 105 via a network.

The memory 175 may contain additional instructions as well, including instructions to transmit data to, receive data from, interact with, or control one or more of the vehicle drive subsystem 142, the vehicle sensor subsystem 144, and the vehicle control subsystem 146 including the autonomous Control system. The in-vehicle control computer (VCU) 150 may control the function of the autonomous vehicle 105 based on inputs received from various vehicle subsystems (e.g., the vehicle drive subsystem 142, the vehicle sensor subsystem 144, and the vehicle control subsystem 146). Additionally, the VCU 150 may send information to the vehicle control subsystems 146 to direct the trajectory, velocity, signaling behaviors, and the like, of the autonomous vehicle 105. The autonomous control vehicle control subsystem may receive a course of action to be taken from the compliance module 166 of the VCU 150 and consequently relay instructions to other subsystems to execute the course of action.

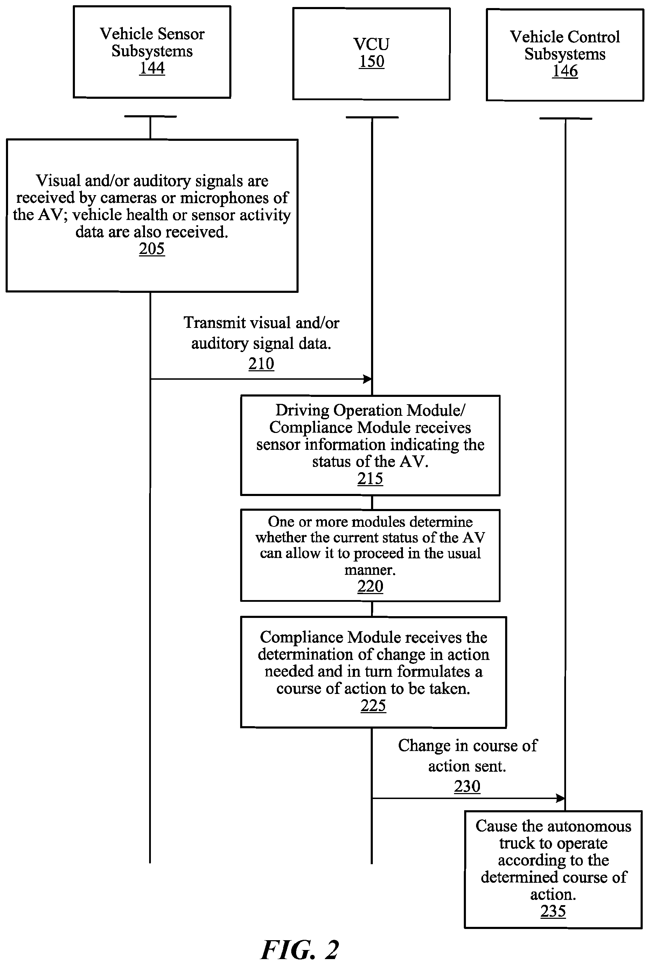

FIG. 2 shows a flow diagram for operation of an autonomous vehicle (AV) 105 safely in light of the health and surroundings of the autonomous vehicle 105. Although this figure depicts functional steps in a particular order for purposes of illustration, the process is not limited to any particular order or arrangement of steps. One skilled in the relevant art will appreciate that the various steps portrayed in this figure could be omitted, rearranged, combined and/or adapted in various ways.

As shown in FIG. 2, the vehicle sensor subsystem 144 receives visual, auditory, or both visual and auditory signals indicating the at the environmental condition of the autonomous vehicle 105, as well as vehicle health or sensor activity data are received in step 205. These visual and/or auditory signal data are transmitted from the vehicle sensor subsystem 144 to the in-vehicle control computer system (VCU) 150, as in step 210. Any of the driving operation module and the compliance module receive the data transmitted from the vehicle sensor subsystem, in step 215. Then, one or both of those modules determine whether the current status of the autonomous vehicle 105 can allow it to proceed in the usual manner or that the autonomous vehicle 105 needs to alter its course to prevent damage or injury or to allow for service in step 220. The information indicating that a change to the course of the autonomous vehicle 105 is needed may include an indicator of sensor malfunction; an indicator of a malfunction in the engine, brakes, or other components necessary for the operation of the autonomous vehicle; a determination of a visual instruction from authorities such as flares, cones, or signage; a determination of authority personnel present on the roadway; a determination of a law enforcement vehicle on the roadway approaching the autonomous vehicle, including from which direction; and a determination of a law enforcement or first responder vehicle moving away from or on a separate roadway from the autonomous vehicle. This information indicating that a change to the AV's course of action is needed may be used by the compliance module to formulate a new course of action to be taken which accounts for the AV's health and surroundings, in step 225. The course of action to be taken may include slowing, stopping, moving into a shoulder, changing route, changing lane while staying on the same general route, and the like. The course of action to be taken may include initiating communications with any oversight or human interaction systems present on the autonomous vehicle. The course of action to be taken may then be transmitted from the VCU 150 to the autonomous control system, in step 230. The vehicle control subsystems 146 then cause the autonomous vehicle 105 to operate in accordance with the course of action to be taken that was received from the VCU 150 in step 235.

It should be understood that the specific order or hierarchy of steps in the processes disclosed herein is an example of exemplary approaches. Based upon design preferences, it is understood that the specific order or hierarchy of steps in the processes may be rearranged while remaining within the scope of the present disclosure. The accompanying method claims present elements of the various steps in a sample order and are not meant to be limited to the specific order or hierarchy presented.

### Systems and Methods for Generating Prior Maps

As described above, aspects of this disclosure relate to the generation and use of prior maps for autonomous vehicles 105. As used herein, a LiDAR prior map generally refers to a grid-based map that records prior information for static objects. The prior information can include, for example, occupancy probability, a most likely semantic label (also referred to simply as a label), and a label probability (e.g., the probability that the semantic label is accurate for the corresponding voxel). Prior maps are particularly useful for perception and navigation of autonomous vehicles 105 driving regular routes. As used herein, the term "prior" is used generally consistent with its meaning in the field of Bayesian statistics. Thus, the prior map can include information about static objects known prior to the autonomous vehicle 105 being driven along traversing highways and roadways. A prior map can be used as a source of knowledge about the environment in which the autonomous vehicle 105 is driven, in addition to the sensors included in the vehicle sensor subsystems 144. In some embodiments, rather than providing real-time facts, a prior map provides prior probabilistic information about the real physical world.

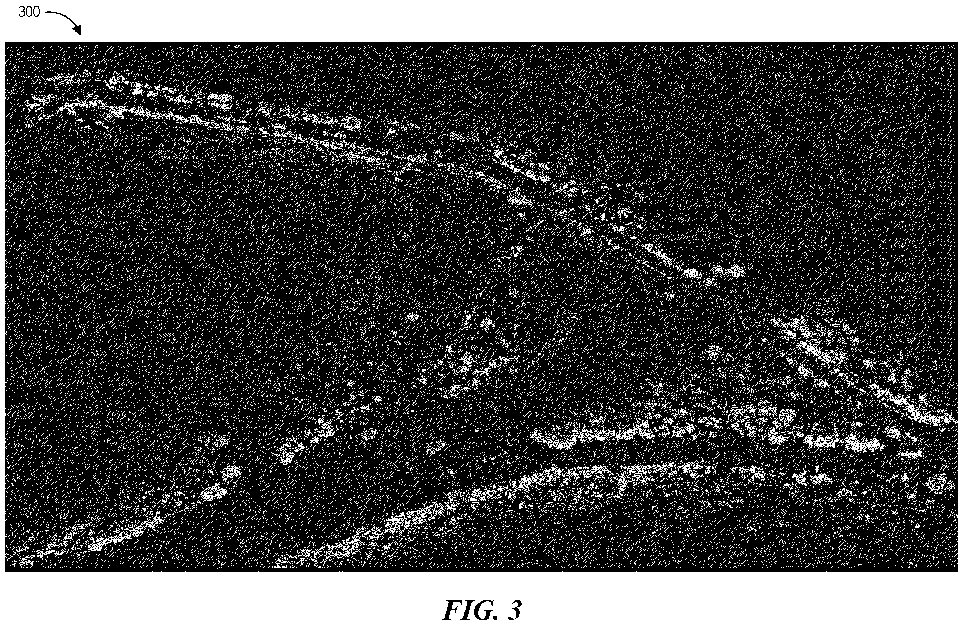

FIG. 3 illustrates an example visualization of a prior map 300 that can be generated in accordance with aspects of this disclosure. The prior map 300 may be formed of a 3D occupancy grid in which each grid is a voxel having a predetermined size. As used herein, a voxel generally refers to the 3D equivalent of a pixel. In one example, each voxel has a 0.4m x 0.4m x 0.4m size; however, aspects of this disclosure are not limited thereto and the voxels may be formed of other sizes depending on the particular implementation.

In the example visualization of the prior map 300, green voxels indicate plants, blue voxels indicate walls and fences, red voxels indicate poles, and yellow voxels indicate traffic signs. The particular colors used in the visualization of the prior map 300 are merely one implementation and different object types can be differentiated using other indicators (e.g., different colors, different fields, metadata, or any other differentiating data).

Depending on the implementation, different combinations of labels can be used to classify the voxels according to the object type the voxels represent. Example labels which may be used in a prior map 300 include: general static objects, plants and vegetation, road curbs, fences, walls, traffic poles and light poles, traffic signs, traffic cones, etc. In some embodiments, the general static object label may be used for voxels which have not been assigned to other labels (e.g., the probability of the voxel belonging to any one of the other labels is less than a threshold probability).

Each voxel can include or be associated with a feature vector. The feature vector can include: a field indicating whether the voxel is occupied, the label of the voxel, a probability that the label of the voxel is accurate, and a probability that the occupancy of the object is accurate (e.g., the likelihood that an object is present at the grid position corresponding to the voxel). Depending on the implementation, the feature vector can include fewer and/or greater number of fields indicative of properties of the corresponding voxel.

In some embodiments, the prior map 300 grids are implemented as 40 cm x 40 cm x 40 cm voxels under Earth-Centered, Earth-Fixed (ECEF) coordinate in 3D real world. In certain implementations, each voxel's three edges may be parallel to ECEF xyz coordinates. When changing coordinates, the prior map server 180 can transform a given voxel's center to the new coordinate. In some embodiments, the coordinate transformation can ignore any rotation transformation because the error introduced due to rotation is at maximum 1/3 the size of the voxel (e.g., 14 cm in worst case for a 40 cm x 40 cm x 40 cm voxel).

The prior map server 180 may generate the prior map 300 to represent static objects which are autonomous driving related objects that do not change over at least a short period of time (e.g., that have a static position/label for greater than a threshold period of time). However, in some embodiments there may be certain exceptions such that certain objects that would otherwise be considered a static object are not included in the prior map 300. For example, in certain implementations, roads and/or any type of ground may not be included in the prior map 300. In addition, the prior map 300 may not include any objects with a height of less than 40 cm above the road surface. In other embodiments, the prior map 300 may also include roads and/or other types of ground in the prior map 300.

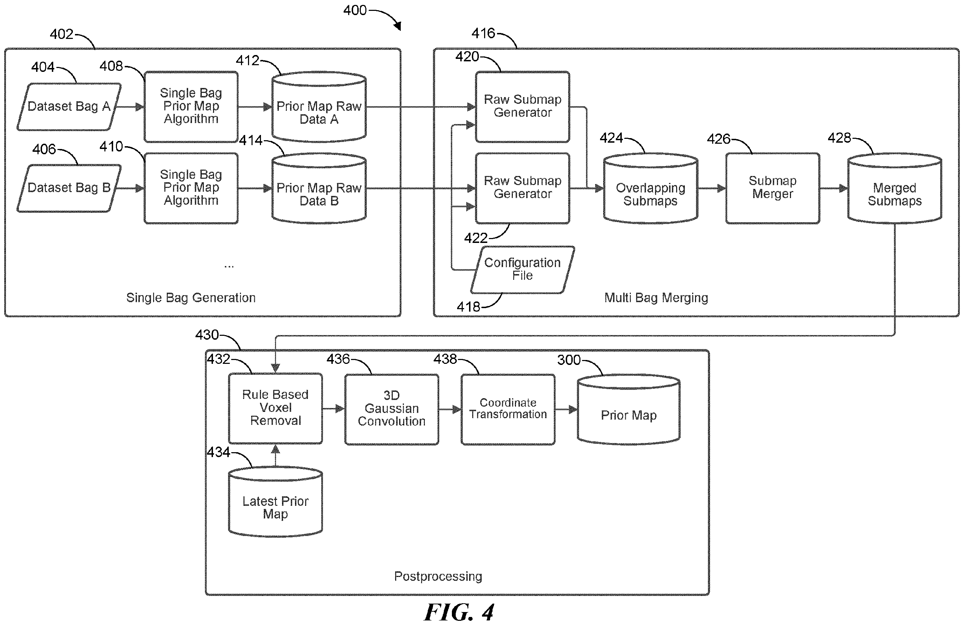

As discussed above, in certain embodiments each voxel includes a semantic label and a probability that the label is accurate. The prior map server 180 is configured to generate the semantic label and the probability that the label is accurate based on LiDAR segmentation results, with multi-bag and multi-frame optimizations as discussed in connection with FIG. 4.

The detection range for a single frame of LiDAR data may be based on the particular LiDAR sensors used on the autonomous vehicle 105 (or the mapping vehicle). In some embodiments, the detection range is about an 80 m radius centered on the autonomous vehicle 105. In order to maintain consistency of the prior map 300 with any change to the static objects present in the environment, the prior map server 180 may be configured to update the prior map 300 using LiDAR data received from one or more autonomous vehicles 105 at least once a month. However, the prior map server 180 may be configured to update the prior map 300 more or less frequently in certain implementations. When the prior map server 180 determines that there are any inconsistencies between the prior map 300 and LiDAR data received from an autonomous vehicle 105 after the most recent prior map 300 was published, the prior map server 180 is configured to update the prior map 300 and provide the updated prior map 300 to one or more autonomous vehicles 105 as soon as possible.

The prior map 300 can be used to improve the accuracy and efficiency of perception algorithms as discussed in connection with FIG. 4. In addition, autonomous vehicles 105 will occasionally encounter situations such as road construction zones when driving. Under certain conditions, the autonomous vehicle 105 may perform a limited or minimal risk condition (MRC) maneuver. For example, when the autonomous vehicle 105 detects that one or more of the sensor subsystems 144 is malfunctioning and/or when the autonomous vehicle 105 is unable to safely navigation through the environment (e.g., during road construction, when the autonomous vehicle 105 detects an accident on the roadway, when the autonomous vehicle 105 requires service, etc.), the autonomous vehicle 105 may perform a MRC maneuver to park the autonomous vehicle 105 in a safe location. The autonomous vehicle 105 may be able to increase the safety associated with executing MRC maneuvers using the prior map 300 in addition to roadblock detection algorithms.

In order to generate the prior map, the prior map server 180 may receive LiDAR data from one or more mapping vehicles and/or one or more autonomous vehicles 105. A mapping vehicle may be a vehicle equipped with one or more LiDAR sensors configured to drive along the roadways in order to collect LiDAR data useful for generating the prior map 300. While certain implementations may employ specialized mapping vehicles (which may be autonomous or non-autonomous), in other embodiments, the LiDAR data may be obtained from autonomous vehicles 105 which navigate along the roadways during their typical operations. LiDAR data can be obtained from autonomous vehicles 105 in addition to or in place of specialized mapping vehicles.

The prior map server 180 is configured to use information extracted from LiDAR data via deep-learning algorithms to estimate static objects (e.g., trees, bridges, walls, etc.) that may be related to autonomous driving of an autonomous vehicle 105. Because occlusion, misclassification, and/or sensor noise may be inevitable from the LiDAR data sources, it can be challenging to generate a prior map 300 that accurately reflects the occupancy of static objects.

FIG. 4 is a flowchart illustrating a method 400 for generating a prior map, such as the prior map 300 of FIG. 3, in accordance with aspect of this disclosure. With reference to FIG. 4, one or more blocks of the method 400 may be implemented, for example, by a processor of a centralized server, such as the prior map server 180, configured to communicate with the autonomous vehicles 105. The method 400 begins at block 402.

At block 402, the prior map server 180 is configured to generate raw data for a prior map 300 using single bag generation. In single bag generation, the prior map server 180 can be configured to generate raw data based on a single bag of LiDAR data. As used herein, a single bag of LiDAR data generally refers to LiDAR data received from an autonomous vehicle 105 during a single run. The autonomous vehicle 105 can be configured to generate the single bag of LiDAR data using one or more LiDAR sensors in addition to an IMU sensor, a GPS sensor, and/or another sensor used to track the location of the autonomous vehicle 105, and thus, the location of the LiDAR sensors.

In the illustrated embodiment, the prior map server 180 is configured to receive a plurality of data bags 404 and 406 from a plurality of different data sources (e.g., two or more autonomous vehicles 105). The prior map server 180 can be configured to run single bag prior map algorithms 408 and 410 for generating LiDAR prior map raw data on each of the data bags 404 and 406. The single bag prior map algorithms 408 and 410 are configured to generate raw data 412 and 414 for each of the data bags 404 and 406. In some embodiments, the single bag prior map algorithms 408 and 410 for generating LiDAR prior map raw data 412 and 414 may include applying deep-learning to the data bags 404 and 406. In some embodiments, the each of the single bag prior map algorithms 408 and 410 employs a deep learning LiDAR segmentation model to process the input LiDAR point clouds from each of the data bags 404 and 406 and the deep learning model predicts a semantic label for each point within the point clouds. Each of the single bag prior map algorithms 408 and 410 is also configured to generate the feature vector for each voxel, including the semantic label. The LiDAR prior map raw data 412 and 414 may be similar in format to the prior map 300 illustrated in FIG. 3 using only the data available from the corresponding single data bag 404 and 406.

In the single bag generation block 402, the prior map server 180 is configured to stream frames from each of the data bags 404 and 406 into the corresponding single bag prior map algorithms 408 and 410 one by one. Each of the single bag prior map algorithms 408 and 410 is configured to generate a probability estimation for each voxel within a single frame range, and accumulate the overlapped observation using a multi-frame merging algorithm based on a binary Bayes filter.

In some embodiments, each of the single bag prior map algorithms 408 and 410 is configured to generate the following items for each voxel in the prior map raw data 412 and 414: occupancy probability, semantic label, and semantic label probability. Occupancy probability may have a unique definition in the context of prior maps, indicating the probability a voxel is occupied by a static object.

As described above, the prior map server 180 can employ deep LiDAR segmentation in the single bag prior map algorithms 408 and 410 to generate the semantic label and semantic label probability in order to assign each LiDAR point a single label. During map building with the single bag prior map algorithms 408 and 410, the LiDAR points with their assigned labels are assigned into voxels. Within each voxel, the prior map server 180 can count the number of each type of point (for example: vegetation: 10 pts, wall: 0 pts, pole: 0 pts, total: 10 pts). the prior map server 180 can generate semantic labels based on a majority vote and the prior map server 180 can calculate the corresponding probability using a sum of exponentials. In some implementations, the probability can be calculated using the following equation: prob(x) = e^{x} / sum(eⁱ) for i in all labels).

The prior map server 180 can also calculate the occupancy probability using the discrete Bayes filter algorithm. In some embodiments, prior map server 180 uses the occupancy probabilities rewritten into the following Logit representation: logit(p) = log(p / (1-p)). One advantage to using Logit representation is that combined with discrete Bayes filter, the Logit representation represents a near additive feature.

In some embodiments, the single bag prior map algorithms 408 and 410 support building the prior map raw data 412 and 414 with the single data bags 404 and 406 datasets as input. In addition, start and end time stamps can be used to facilitate bag segments. In some embodiments, the single bag prior map algorithms 408 and 410 can follow the data streaming paradigm, where each frame of a bag is loaded on the origin time sequence and processed. Within one frame, the deep lidar segmentation applied by the single bag prior map algorithms 408 and 410 can be applied on the LiDAR point cloud first, and the points with dynamic semantic labels may be filtered out (including pedestrians, vehicles, bikes, etc.). Thereafter, the points with static object labels can be assigned a label i.

At block 416, the prior map server 180 is configured to merge the raw data 412 and 414 to generate a LiDAR prior map 428. In particular, block 416 includes a first raw submap generator 420, a second raw submap generator 422, a configuration file 418, overlapped submaps 424, a submap merger 426, and the merged submaps 428. After the single bag(s) generation process finishes, a user can select all or portions of the LiDAR prior map raw data 412 and 414 to be merged together. The merged submaps 428 resulting from the multi-bag merging process 416 is usually better than using only a single-bag because the error caused by sensor random noise and occlusion can be dramatically relieved after merging.

The first and second raw submap generators 420 and 422 are configured to generate overlapping submaps 424 based on a corresponding one of the LiDAR prior map raw data 412 and 414 and the configuration file 418. In some implementations, the prior map server 180 is configured to merge the prior map raw data 412 and 414 based on the configuration file 418. The configuration file 418 is configured to improve ease and flexibility in building the product-level prior map 300.

The prior map server 180 is configured to apply the submap merger 426 to merge the overlapping submaps 424 with the same location to generate merged submaps 428. The multibag merger 426 can include determining the occupancy probability of each voxel after combining all information from all of the of the data bags 404 and 406. Single bag results are usually highly correlated with multi bag results. In addition, due to the influence of random noise, each single bag observation may deviate slightly from the corresponding multibag merged results. Thus, one goal of the multibag merger is to minimize this deviation.

At block 430, the prior map server 180 can post process the LiDAR prior map 428 to generate the prior map 300. In executing the postprocessing block 430, the prior map server 180 can apply a rule based voxel removal 432 based on the merged submaps and the latest prior map 434. The prior map server 180 can apply a 3D Gaussian convolution 436, and a coordinate transformation 438 in generating the prior map 300. In some embodiments, the rule based voxel removal 432 can include drivable range map filtering. For example, since deep LiDAR segmentation may not reach 100% accuracy, the deep model may classify vehicles as vegetation and walls, resulting in false positive voxels in drivable areas. The rule based voxel removal 432 can assume no static object is possible in drivable areas, and thus, latest prior map 434 can be used to filter out the voxels within drivable lane range.

Online localization and pose estimation algorithms may not always be correct, and for some special scenarios the error could be tens of centimeters. The error in localization and pose estimation can lead to dramatic performance decrease of the prior map 300. One compromise solution is to apply the 3D Gaussian convolution 436 on the merged submaps 428. The result after 3D Gaussian convolution 436 may be analogous to an image after applying blurring effect, voxel occupancy probabilities on the edge will gradually decrease rather than sharply drop.

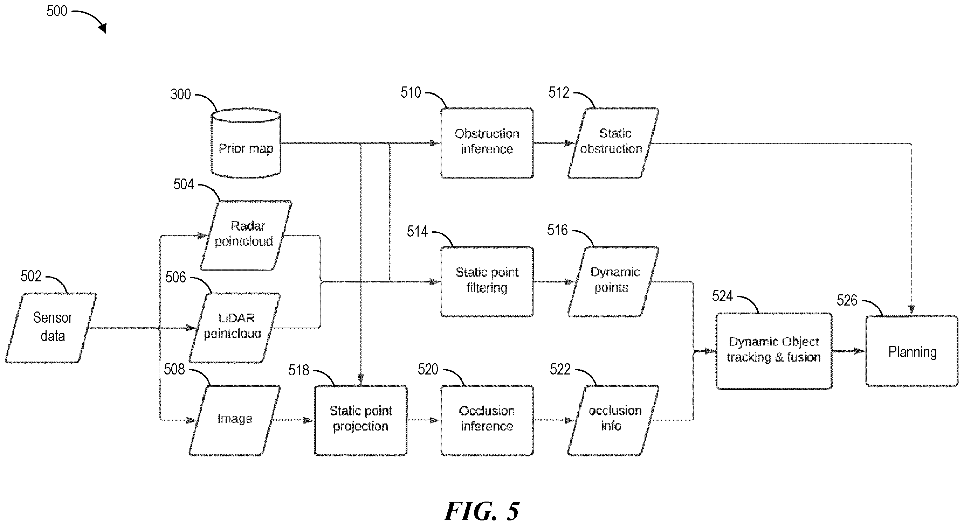

FIG. 5 is a block diagram 500 illustrating how the prior map 300 can be used by a planning algorithm 526 of an autonomous vehicle 105 in accordance with aspects of this disclosure. With reference to FIG. 5, one or more blocks may be implemented, for example, by a processor 170 of an autonomous vehicle 105 (e.g., as illustrated in FIG. 1). The processor 170 receives sensor data 502 from one or more of the vehicle sensor subsystems 144 (e.g., from the camera sensor(s), the radar sensor (s), and/or the LiDAR sensor(s)). The processor 170 is configured to generate a radar pointcloud 504, a LiDAR pointcloud 506, and image data 508 based on the sensor data 502.

The processor 170 can execute an obstruction inference algorithm 510 using the prior map 300 as an input. For example, if any of the static objects in the prior map 300 are located in positions that would at least partially obstruct one or more of the sensor subsystems 144, the processor 170 can identify static obstructions, generate static obstruction data 512 representing the static obstructions and provide the static obstruction data 512 to the planning algorithm 526.

The processor 170 is also configured to execute a static point filtering algorithm 514 to generate dynamic point data 516 using the prior map 300, the radar pointcloud 504, and the LiDAR pointcloud 506 as inputs. For example, the processor 170 may filter static objects identified by the prior map 300 from the radar pointcloud 504 and the LiDAR pointcloud 506, thereby generating a pointcloud containing dynamic objects represented by the dynamic point data 516. Although filtering has been described in connection with filtering of the radar pointcloud 504 and the LiDAR pointcloud 506, the processor 170 may also be configured to filter static objects from other types of sensor data.

The processor 170 is further configured to execute a static point projection algorithm 518 using the prior map and the image data 508 as inputs. The static point projection algorithm 518 is configured to project the 3D information contained in the prior map 300 onto a two-dimensional (2D) plane so that the image data 508 can be compared with the 2D projected prior map 300 objects. The processor 170 can then execute an occlusion inference algorithm 520 to generate occlusion information 522 indicative of whether any of the static objects from the prior map 300 are occluding a portion of the image data 508.

The processor 170 is configured to execute a dynamic object tracking and fusion algorithm 524 using the dynamic point data 516 and the occlusion information 522. The dynamic object tracking can, for example, track the position of dynamic objects as they move through frames. The dynamic object tracking and fusion algorithm 524 can also use the occlusion information 522 to determine whether a tracked object has been partially of fully occluded by another object, such as a static object from the prior map 300.

The processor 170 is also configured to execute the planning algorithm 526 based on the static obstruction data 512 and the output of the dynamic object tracking and fusion algorithm 524. For example, the planning algorithm 526 can determine a best course of action for the autonomous vehicle 105 to take based on the planning algorithm's 526 knowledge of static and dynamic objects in the environment based on the static obstruction data 512 and the output of the dynamic object tracking and fusion algorithm 524.

In addition to being used by the planning algorithm 526, the prior map 300 can also be useful as an input to other algorithms running on the processor 170 of the autonomous vehicle 105. For example, the processor 170 may also run a prediction algorithm configured to predict the movement of dynamic objects in the environment. In one example, the processor 170 may detect an object near the side of the road and determine that there is a probability that the detected object is a person due to the size of the detected object. However, if the prior map 300 includes a static object at the same position as the detected object, the processor 170 may be able to determine that the detected object is in fact not a person. The processor 170 can then focus its limited resources on other important functions without dedicating resources to the prediction of movement of the static object. Similarly, the prior map 300 can also be used as an input for tracking an object to help distinguish between static objects and potentially dynamic objects which should be tracked using the tracking algorithm.

In addition to encoding static objects in the prior map 300, the prior map server 180 may also be configured to encode frequency-based occupancy in the prior map 300 in certain implementations. Frequency-based occupancy may refer to objects which are not static, but frequently occupy one or more grids within the prior map 300. For example, animals may cross a highway at a given location with a frequency that is greater than a threshold frequency. In this case, the prior map server 180 may generate the prior map 300 to include voxels that represent frequency-based occupancy of certain grids. The vectors may include an additional field that represents the frequency at which the corresponding grids are occupied by the corresponding dynamic objects.

Frequency-based occupancy can also be used to encode the behavior of other vehicles on the road. For example, when there is an upcoming exit, the prior map 300 can encode the probability that a vehicle present in certain grids will exit the highway at the upcoming exit.

### Conclusion

Though much of this document refers to an autonomous truck, it should be understood that any autonomous ground vehicle may have such features. Autonomous vehicles which traverse over the ground may include: semis, tractor-trailers, 18 wheelers, lorries, class 8 vehicles, passenger vehicles, transport vans, cargo vans, recreational vehicles, golf carts, transport carts, and the like.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

To aid the Patent Office, and any readers of any patent issued on this application in interpreting the claims appended hereto, applicants note that they do not intend any of the appended claims to invoke 35 U.S.C. § 112(f) as it exists on the date of filing hereof unless the words "means for" or "step for" are explicitly used in the particular claim.

### NUMBERED STATEMENTS OF INVENTION

1. A server comprising:
   a network communication device configured to communicate with a plurality of autonomous vehicles over a network;
   a memory; and
   a processor configured to:
      receive LiDAR data from the plurality of autonomous vehicles,
      generate a LiDAR prior map comprising raw data based on the LiDAR data received from each of the plurality of autonomous vehicles,
      merge the raw data into a prior map, the prior map comprising an occupancy grid indicative of locations of static objects within an environment of the plurality of autonomous vehicles, and
      provide the prior map to the plurality of autonomous vehicles.
2. The server of statement 1, wherein the occupancy grid of the prior map comprises a voxel, each of the voxels including a feature vector indicating whether the voxel is occupied by a static object.
3. The server of statement 2, wherein each of the feature vectors comprises a semantic label indicative of a type of a corresponding one of the static objects occupying the occupancy grid corresponding to the feature vector.
4. The server of statement 2 or 3, wherein each of the feature vectors comprises: a semantic label indicative of a type of a corresponding one of the static objects, a probability that the semantic label is accurate, and a probability that the occupancy of the static object is accurate.
5. The server of any preceding statement, wherein the processor is further configured to:
   generate the raw data without including any of the static objects having a height of less than 40 cm above a surface of a road.
6. The server of any preceding statement, wherein the processor is further configured to:
   post-process the merged raw data prior to generating the prior map.
7. The server of statement 6, wherein:
   the memory is configured to store a configuration file, and
   the post-processing is performed based on the configuration file.
8. The server of any preceding statement, wherein generating the LiDAR prior map comprises applying deep-learning to the LiDAR data.
9. The server of any preceding statement, wherein the processor is further configured to receive the LiDAR data from one or more mapping vehicles comprising one or more LiDAR sensors configured to scan the environment for the static objects.
10. The server of any preceding statement, wherein the prior map further defines frequency-based occupancy for at least some dynamic objects.
11. A method of generating a prior map, comprising:
   receive LiDAR data from a plurality of autonomous vehicles;
   generate a LiDAR prior map comprising raw data based on the LiDAR data received from each of the plurality of autonomous vehicles;
   merge the raw data into a prior map, the prior map comprising an occupancy grid indicative of locations of static objects within an environment of the plurality of autonomous vehicles; and
   provide the prior map to the plurality of autonomous vehicles.
12. The method of statement 11, wherein the occupancy grid comprises a plurality of 40 cm x 40 cm x 40 cm voxels under Earth-Centered, Earth-Fixed (ECEF) coordinates.
13. The method of statement 12, further comprising transforming a voxel center from the LiDAR data to the ECEF coordinates, wherein the transforming is performed without including a rotation transformation.
14. The method of any of statements 11 to 13, wherein one or more of the voxels comprises a feature vector including a first field that indicates a frequency-based occupancy for a dynamic object.
15. The method of statement 14, wherein the feature vector further includes a second field that indicates a frequency at which the corresponding occupancy grid is occupied by the dynamic object.
16. An autonomous vehicle comprising:
   at least one sensor configured to output sensor data;
   a memory;
   a network communications subsystem configured to receive a prior map from a prior map server, the prior map comprising an occupancy grid indicative of locations of static objects within an environment of the autonomous vehicle; and
   a processor configured to:
      receive the sensor data from the at least one sensor, and
      generate one or more control signals for autonomous driving of the autonomous vehicle based on the sensor data and the prior map.
17. The autonomous vehicle of statement 16, wherein the processor is further configured to:
   filter the sensor data based on the prior map to remove static objects from the sensor data; and
   determine locations of dynamic objects remaining in the filtered sensor data,
   wherein the generating the one or more control signals is further based on the determined locations of the dynamic objects.
18. The autonomous vehicle of statement 16 or 17, wherein the processor is further configured to:
   project three-dimensional (3D) data of the prior map onto a two-dimensional (2D) plane; and
   compare the projected prior map data to the sensor data,
   wherein the generating the one or more control signals is further based on the comparison between the projected prior map data and the sensor data.
19. The autonomous vehicle of any of statements 16 to 18, wherein the occupancy grid includes a feature vector comprising a semantic label indicative of a type of a corresponding one of the static objects, the semantic label being configured to identify one or more of the following types of static objects: general static objects, plants and vegetation, road curbs, fences, walls, traffic poles and light poles, traffic signs, traffic cones.
20. The autonomous vehicle of any of statements 11 to 19, wherein:
   the at least one sensor comprises a LiDAR sensor configured to output LiDAR data,
   the processor is further configured to:
      store the LiDAR data in the memory over the course of a single run, and
      transmit the stored LiDAR data to the prior map server after the single run is complete.

## Claims

1. A server comprising:
a network communication device configured to communicate with a plurality of autonomous vehicles over a network;
a memory; and
a processor configured to:
receive LiDAR data from the plurality of autonomous vehicles,
generate a LiDAR prior map comprising raw data based on the LiDAR data received from each of the plurality of autonomous vehicles,
merge the raw data into a prior map, the prior map comprising an occupancy grid indicative of locations of static objects within an environment of the plurality of autonomous vehicles, and
provide the prior map to the plurality of autonomous vehicles.

2. The server of Claim 1, wherein the occupancy grid of the prior map comprises a voxel, each of the voxels including a feature vector indicating whether the voxel is occupied by a static object.

3. The server of Claim 2, wherein each of the feature vectors comprises a semantic label indicative of a type of a corresponding one of the static objects occupying the occupancy grid corresponding to the feature vector, or wherein each of the feature vectors comprises: a semantic label indicative of a type of a corresponding one of the static objects, a probability that the semantic label is accurate, and a probability that the occupancy of the static object is accurate.

4. The server of any preceding Claim, wherein the processor is further configured to:
generate the raw data without including any of the static objects having a height of less than 40 cm above a surface of a road.

5. The server of any preceding Claim, wherein the processor is further configured to:
post-process the merged raw data prior to generating the prior map, preferably wherein:
the memory is configured to store a configuration file, and
the post-processing is performed based on the configuration file.

6. The server of any preceding Claim, wherein generating the LiDAR prior map comprises applying deep-learning to the LiDAR data.

7. The server of any preceding Claim, wherein the processor is further configured to receive the LiDAR data from one or more mapping vehicles comprising one or more LiDAR sensors configured to scan the environment for the static objects.

8. The server of any preceding Claim, wherein the prior map further defines frequency-based occupancy for at least some dynamic objects.

9. A computer implemented method of generating a prior map, comprising:
receive LiDAR data from a plurality of autonomous vehicles;
generate a LiDAR prior map comprising raw data based on the LiDAR data received from each of the plurality of autonomous vehicles;
merge the raw data into a prior map, the prior map comprising an occupancy grid indicative of locations of static objects within an environment of the plurality of autonomous vehicles; and
provide the prior map to the plurality of autonomous vehicles.

10. The method of Claim 9, wherein the occupancy grid comprises a plurality of 40 cm x 40 cm x 40 cm voxels under Earth-Centered, Earth-Fixed (ECEF) coordinates, preferably further comprising transforming a voxel center from the LiDAR data to the ECEF coordinates, wherein the transforming is performed without including a rotation transformation.

11. The method of Claim 9 or 10, wherein one or more of the voxels comprises a feature vector including a first field that indicates a frequency-based occupancy for a dynamic object and/or, wherein the feature vector further includes a second field that indicates a frequency at which the corresponding occupancy grid is occupied by the dynamic object.

12. An autonomous vehicle comprising:
at least one sensor configured to output sensor data;
a memory;
a network communications subsystem configured to receive a prior map from a prior map server, the prior map comprising an occupancy grid indicative of locations of static objects within an environment of the autonomous vehicle; and
a processor configured to:
receive the sensor data from the at least one sensor, and
generate one or more control signals for autonomous driving of the autonomous vehicle based on the sensor data and the prior map.

13. The autonomous vehicle of Claim 12, wherein the processor is further configured to:
filter the sensor data based on the prior map to remove static objects from the sensor data; and
determine locations of dynamic objects remaining in the filtered sensor data,
wherein the generating the one or more control signals is further based on the determined locations of the dynamic objects.

14. The autonomous vehicle of Claim 12 or 13, wherein the processor is further configured to:
project three-dimensional (3D) data of the prior map onto a two-dimensional (2D) plane; and
compare the projected prior map data to the sensor data,
wherein the generating the one or more control signals is further based on the comparison between the projected prior map data and the sensor data.

15. The autonomous vehicle of any of Claims 12 to 14, wherein the occupancy grid includes a feature vector comprising a semantic label indicative of a type of a corresponding one of the static objects, the semantic label being configured to identify one or more of the following types of static objects: general static objects, plants and vegetation, road curbs, fences, walls, traffic poles and light poles, traffic signs, traffic cones and/or, wherein:
the at least one sensor comprises a LiDAR sensor configured to output LiDAR data,
the processor is further configured to:
store the LiDAR data in the memory over the course of a single run, and
transmit the stored LiDAR data to the prior map server after the single run is complete.
